# EUROPÄISCHE PATENTSCHRIFT

(11) **EP 2 287 493 B1**
(45) Veröffentlichungstag und Bekanntmachung des Hinweises auf die Patenterteilung: **21.08.2013**
(21) Anmeldenummer: 10167490.1
(22) Anmeldetag: 28.06.2010
(51) Int. Cl.: F16F 15/26

(54) **Unwuchtwelle**
Unbalanced shaft
Arbre à balourd

(30) Priorität: 29.07.2009 DE 102009035112
(43) Veröffentlichungstag der Anmeldung: 23.02.2011
(73) Patentinhaber: Schaeffler Technologies AG & Co. KG, 91074 Herzogenaurach (DE)
(72) Erfinder: Solfrank, Peter, 96158, Frensdorf (DE)

(56) Entgegenhaltungen:
- EP-A2- 1 775 484
- WO-A1-2005/088163
- DE-A1- 19 947 271
- DE-A1-102004 014 014
- DE-A1-102007 009 800
- DE-A1-102007 017 873
- DE-A1-102007 027 990
- JP-A- 9 151 993
- JP-A- 11 101 311

## Beschreibung

### Gebiet der Erfindung

Die Erfindung betrifft eine Unwuchtwelle mit einem Wellenabschnitt und einem axial daran angrenzenden Lagerzapfen, der eine vollzylindrische, als Innenlaufbahn für die Wälzkörper eines Wälzlagers dienende Außenmantelfläche aufweist und mehrteilig ausgebildet ist derart, dass sowohl der Wellenabschnitt als auch der Lagerzapfen einen Massenschwerpunkt aufweist, der zur Erzeugung der Wellenunwucht exzentrisch zur Drehachse der Unwuchtwelle verläuft. Die Unwuchtwelle dient insbesondere zum Ausgleich von Massenkräften und/oder Massenmomenten einer Brennkraftmaschine.

### Hintergrund der Erfindung

Gattungsgemäße Unwuchtwellen gehen aus der DE 10 2007 009 800 A1 und der DE 10 2007 027 990 A1 hervor. Eine signifikante Massenreduzierung der Unwuchtwelle wird jeweils dadurch erzielt, dass nicht nur die Wellenabschnitte sondern, auch die Lagerzapfen an der Erzeugung der Wellenunwucht beteiligt sind. Die Lagerzapfen besitzen zu diesem Zweck die Form eines Teilzylinders mit einer Querschnittsfläche, die im wesentlichen spiegelsymmetrisch zur mitdrehenden Unwuchtrichtung ist und deren Flächenschwerpunkt exzentrisch zur Drehachse in Unwuchtrichtung verläuft. Die kreisbogenförmige Außenmantelfläche des Teilzylinders wird durch einen damit gefügten Lagerring bzw. ein Lagerringstück zu einem Vollzylinder ergänzt, um eine geschlossene, d.h. 360° betragende Innenlaufbahn für die Wälzkörper eines Wälzlagers zu erzeugen, das zur reibungsgünstigen Lagerung der Unwuchtwelle in der Brennkraftmaschine dient.

Gegenüber hydrodynamischen Gleitlagern kann bei wälzgelagerten Unwuchtwellen zudem die druckbeaufschlagte Schmiermittelversorgung der Lagerzapfen entfallen und durch eine drucklose Schmiermittelversorgung ersetzt werden. Diese kann gemäß der EP 1 775 484 A2 durch betrieblich entstehenden Ölnebel erfolgen, der die dort am Außenumfang des breitenveränderlichen Lagerzapfens lokal überstehenden Wälzkörper in ausreichender Menge erreicht. Im Falle der eingangs zitierten Druckschriften ist jedoch eine Verschleiß fördernde Mangelschmierung des Wälzkontakts zwischen Wälzkörper und Innenlaufbahn zu befürchten, da es sich um eine vollständig geschlossene Innenlaufbahn ohne ausreichenden Schmiermittelzugang in das Innere des Wälzlagers handelt.

### Aufgabe der Erfindung

Der vorliegenden Erfindung liegt daher die Aufgabe zugrunde, eine wälzgelagerte Unwuchtwelle der eingangs genannten Art so fortzubilden, dass das Risiko einer betrieblichen Mangelschmierung der Wälzlagerung minimiert ist.

### Zusammenfassung der Erfindung

Erfindungsgemäß wird diese Aufgabe durch die kennzeichnenden Merkmale des Anspruchs 1 gelöst, während vorteilhafte Weiterbildungen und Ausgestaltungen den Unteransprüchen entnehmbar sind. Demnach soll der Lagerzapfen von einem radial auswärts verlaufenden und bezüglich dessen Massenschwerpunkts jenseits der Drehachse auf der Außenmantelfläche austretenden Ölkanal zur Schmiermittelversorgung der Innenlaufbahn und der Wälzkörper durchsetzt sein. Mit anderen Worten stellt der Ölkanal eine frei durchströmbare Verbindung zwischen der mit Ölnebel gefüllten Umgebung des Lagerzapfens und dessen Außenmantelfläche dar, um die Wälzkörper und die Innenlaufbahn in ausreichender Menge mit Schmiermittel versorgen zu können. Die radiale Lage des vorzugsweise axial mittig auf der Außenmantelfläche positionierten Ölkanalaustritts fern des Massenschwerpunkts (d.h. im lastarmen Umfangsbereich des Lagerzapfens) ist zum einen deshalb so gewählt, als die Innenlaufbahn im Bereich der mitrotierenden Lastzone seitens des Massenschwerpunkts frei von Unterbrechungen ist und diesbezüglich eine maximale Tragfähigkeit für den Wälzkontakt aufweist. Wie in bevorzugten Ausgestaltungen der Erfindung vorgesehen, kann eine solche Anordnung des Ölkanals zum anderen fertigungstechnisch zweckmäßig sein. Bedarfsweise können selbstverständlich auch mehrere derartiger Ölkanäle vorgesehen sein.

Weiterhin soll der Lagerzapfen aus einem integral mit dem Wellenabschnitt und lediglich teilzylindrisch ausgebildeten Lagerzapfenkern und aus einem den Lagerzapfenkern vollständig umschließenden Lagerring zusammengesetzt sein. Dabei durchsetzt der Ölkanal einen dem Massenschwerpunkt des Lagerzapfens diametral gegenüberliegenden und den Lagerzapfenkern frei überspannenden Teilumfang des Lagerrings radial. Während der geschlossene Lagerring im Hinblick auf die geringe Masse der Unwuchtwelle möglichst dünnwandig ist und zweckmäßigerweise aus einem Wälzlagerstahl wie 100Cr6 besteht, kann die Unwuchtwelle im übrigen als kostengünstig herstellbares Gussteil ohne besondere Tragfähigkeit für einen Wälzkontakt ausgeführt sein.

In einer nicht von der Erfindung eingeschlossenen Form, soll der Lagerzapfen aus einem integral mit dem Wellenabschnitt und lediglich teilzylindrisch ausgebildeten Lagerzapfenabschnitt und aus einem an den Lagerzapfenabschnitt anschließenden Lagerringstück zusammengesetzt sein. Dabei durchsetzt der Ölkanal das dem Massenschwerpunkt des Lagerzapfens diametral gegenüberliegende und den Lagerzapfenabschnitt frei überspannende Lagerringstück radial. Anders als bei der vorhergehenden ersten Ausgestaltung setzt sich die Innenlaufbahn in diesem Fall aus der im Bereich der Lastzone verlaufenden kreisbogenförmigen Außenmantelfläche des Lagerzapfenabschnitts und aus der außerhalb der Lastzone verlaufenden kreisbogenförmigen Außenmantelfläche des Lagerringsstücks zusammen. Da der Lagerzapfenabschnitt unmittelbar als Innenlaufbahn für die Wälzkörper dient, ist die Unwuchtwelle zweckmäßigerweise als hinsichtlich des Wälzkontakts tragfähiges Schmiedeteil ausgebildet.

In einer weiteren, nicht von der Erfindung umfassten Form, soll der Lagerzapfen aus einem integral mit dem Wellenabschnitt und lediglich teilzylindrisch ausgebildeten Lagerzapfenabschnitt und aus einem den Lagerzapfenabschnitt zu einem an beiden Axialstirnseiten geschlossenen Zylinder ergänzenden Lagersegment zusammengesetzt sein. Dabei durchsetzt der Ölkanal das dem Massenschwerpunkt des Lagerzapfens diametral gegenüberliegende Lagersegment zwischen einer der Axialstirnseiten und der Außenmantelfläche des Lagersegments radial. Ein mit Axialstirnwänden in seiner Form versteiftes Lagersegment ist dann zu bevorzugen, wenn das Lagersegment aus einem Leichtbauwerkstoff mit geringer Eigensteifigkeit besteht und lediglich der radialen Führung der Wälzkörper auf der Innenlaufbahn dient. Ein solches Lagersegment ist besonders massearm und gleichzeitig kostengünstig als Spritzgussteil aus Kunststoff herzustellen. Zudem kann das Lagersegment entweder als Hohlkörper oder massiv ausgebildet sein. In letzterem Falle soll der Ölkanal als zur Drehachse der Unwuchtwelle schräg verlaufende Bohrung ausgebildet sein.

Die oben angesprochenen, fertigungstechnischen Vorteile bei der Herstellung der Ölkanäle ergeben sich bei der vorstehend genannten Ausgestaltung dadurch, dass jeweils der Ölkanal nicht durch eine aufwändige Bohrung durch den Lagerzapfenkern bzw. -abschnitt hergestellt werden muss, sondern es ausreichend ist, den vergleichsweise dünnwandigen Lagerring bzw. das Lagerringstück mit einer beispielsweise gestanzten Öffnung zu versehen. Im Falle des aus Kunststoff bestehenden Lagersegment kann der Ölkanal als spanlos hergestellte Bohrung bereits im Spritzgusswerkzeug vorgehalten werden.

### Kurze Beschreibung der Zeichnungen

Weitere Merkmale der Erfindung ergeben sich aus der nachfolgenden Beschreibung und aus den Zeichnungen, in denen Ausgestaltungsbeispiele erfindungsgemäßer Unwuchtwellen perspektivisch und teilweise vereinfacht dargestellt sind. Sofern nicht anders erwähnt, sind dabei gleiche oder funktionsgleiche Merkmale oder Bauteile mit gleichen Bezugszahlen versehen. Es zeigen:
- Figur 1: eine Unwuchtwelle in einer ersten Ausgestaltung;
- Figur 2: eine Brennkraftmaschine mit Massenausgleich in schematischer Darstellung;
- Figur 3: im perspektivischen Teilschnitt ein Wälzlager zur radialen Lagerung der Unwuchtwelle in der Brennkraftmaschine;
- Figur 4: eine Unwuchtwelle, die keine Ausgestaltung der Erfindung ist und
- Figur 5: eine Unwuchtwelle, die ebenfalls keine Ausgestaltung der Erfindung ist.

### Ausführliche Beschreibung der Zeichnungen

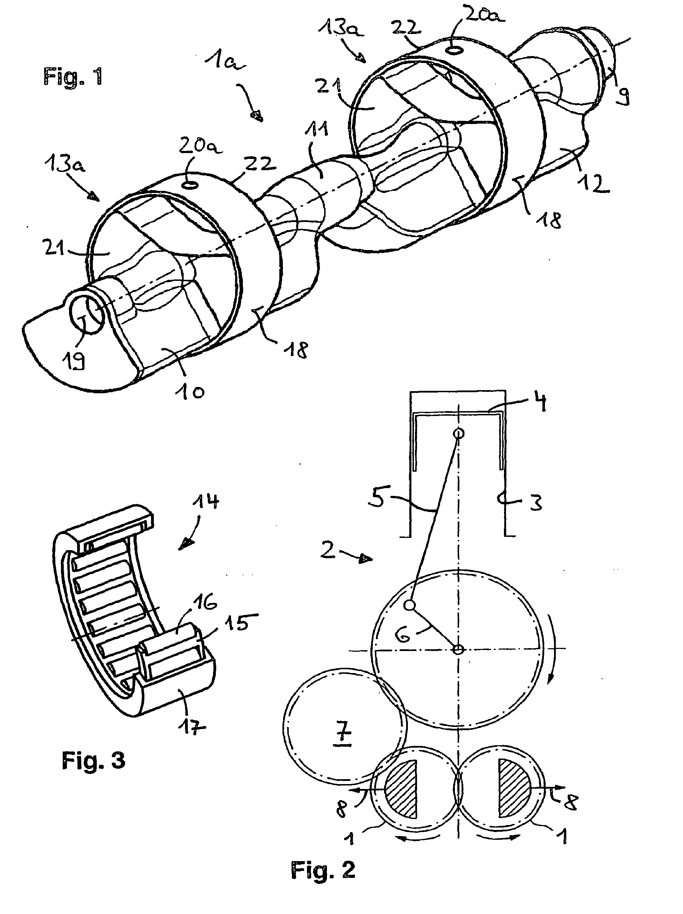

In den Figuren 1, 4 und 5 sind Unwuchtwellen 1 offenbart, die zum Ausgleich von Massenkräften zweiter Ordnung einer Hubkolben-Brennkraftmaschine in Vierzylinder-Reihenbauweise dienen. Ein solches auch als Lancaster-Ausgleich bekanntes Massenausgleichsgetriebe geht aus dem in Figur 2 dargestellten Getriebeschema hervor. Die Brennkraftmaschine 2 umfasst vier in Zylindern 3 oszillierende Kolben 4, deren Längsbewegung über Pleuel 5 in die Rotation einer Kurbelwelle 6 umgesetzt wird. Diese treibt - hier über eine Zwischenwelle 7 - zwei Unwuchtwellen 1 mit Unwuchten 8 an, wobei die Unwuchtwellen 1 parallel zur Kurbelwelle 6 mit doppelter Kurbelwellendrehzahl gegenläufig rotieren.

Die Unwuchtwellen 1, die an einem Antriebsabschnitt 9 beispielsweise über ein nicht dargestelltes Kettenrad oder Zahnrad angetrieben werden, umfassen jeweils drei Wellenabschnitte 10, 11 und 12 sowie zwei axial daran angrenzende Lagerzapfen 13, an denen die Unwuchtwellen 1 in Gehäuselagerstellen der Brennkraftmaschine 2 radial wälzgelagert sind. Als Wälzlager kommen - wie in Figur 3 dargestellt - Nadelhülsen 14 zum Einsatz, die aus einem Käfig 15 mit darin geführten Nadeln 16 als Wälzkörper und einem spanlos hergestellten, dünnwandigen Außenring 17 bestehen. Die Außenmantelflächen 18 der mehrteilig und hier zweiteilig ausgebildeten Lagerzapfen 13 sind vollzylindrisch und dienen als Innenlaufbahn für die Nadeln 16.

Zugunsten einer möglichst geringen Wellen masse weisen nicht nur die Wellenabschnitte 10, 11 und 12, sondern auch die Lagerzapfen 13 Massenschwerpunkte auf, die zur Erzeugung der Wellenunwucht exzentrisch zur Drehachse 19 und im wesentlichen in einer gemeinsamen Unwuchtebene verlaufen. Da es sich bei der Radiallagerung der Unwuchtwellen 1 bekanntermaßen um ein Umlaufverhältnis mit Punktlast an den Lagerzapfen 13 sowie Umfangslast an den Gehäuselagerstellen der Brennkraftmaschine 2 handelt, bildet sich auf den Außenmantelflächen 18 der Lagerzapfen 13 eine stationäre Lastzone aus, die bezüglich des Massenschwerpunkts diesseits der Drehachse 19 und symmetrisch zur Unwuchtebene verläuft. Demgegenüber ist der diametral gegenüberliegende Teilumfang der Lagerzapfen 13 im wesentlichen lastfrei.

Gemäß den nachfolgend erläuterten Ausgestaltungsbeispielen erfolgt die Schmiermittelversorgung der Wälzlagerungen jeweils über Ölkanäle 20, die in den Lagerzapfen 13 radial auswärts verlaufen und am lastfreien Teilumfang, d.h. bezüglich des Massenschwerpunkts jenseits der Drehachse 19, axial mittig an den Innenlaufbahnen 18 austreten. Hierdurch werden die Innenlaufbahnen 18 und die Nadeln 16 ausreichend mit Schmiermittel versorgt, das mit Unterstützung der Zentrifugalbeschleunigung infolge Drehung der Unwuchtwellen 1 aus der betrieblich mit Ölnebel gefüllten Umgebung der Lagerzapfen 13 zu den Wälzkontakten transportiert wird. Wie es aus Figur 3 deutlich wird, ist ein axialer Schmiermitteltransport zwischen der Außenmantelfläche 18 der Lagerzapfen 13 einerseits und den sich radial einwärts erstreckenden Axialborden des Außenrings 17 sowie dem Käfig 15 andererseits nur beschränkt möglich und kann zum Ausfall der Wälzlagerung infolge Mangelschmierung führen.

Bei der Unwuchtwelle 1a gemäß Figur 1 ist jeder der Lagerzapfen 13a aus einem integral, d.h. einstückig mit den Wellenabschnitten 10, 11, 12 und lediglich teilzylindrisch ausgebildeten Lagerzapfenkern 21 und einem diesen vollständig umschließenden Lagerring 22 aus dünnwandigem Wälzlagerstahl fest zusammengesetzt. Dabei durchsetzt der als gestanzte Öffnung hergestellte Ölkanal 20a einen den Lagerzapfenkern 21 frei überspannenden Teilumfang des Lagerrings 22.

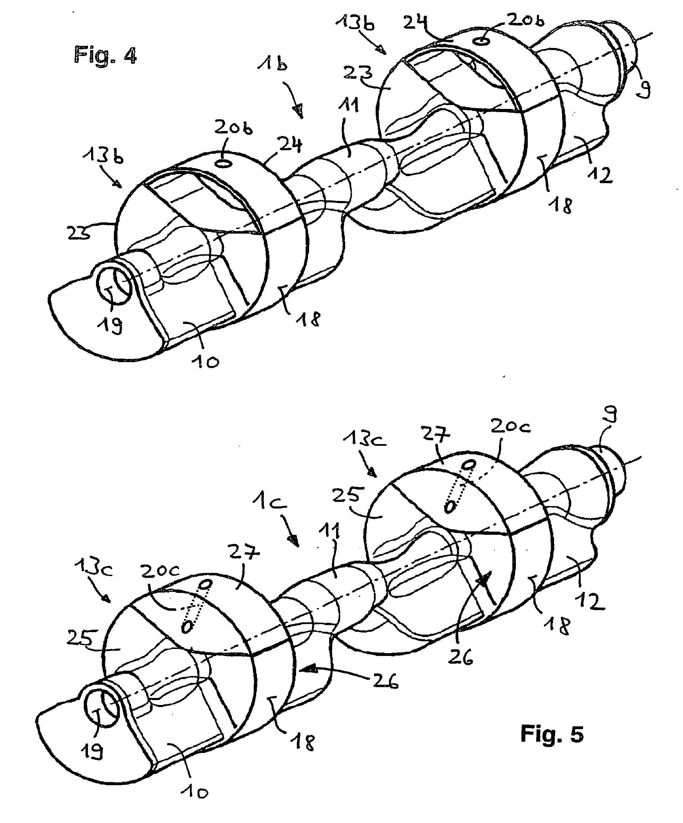

Bei der Unwuchtwelle 1 b gemäß Figur 4 ist jeder der Lagerzapfen 13b aus einem integral mit den Wellenabschnitten 10, 11, 12 und lediglich teilzylindrisch ausgebildeten Lagerzapfenabschnitt 23 und einem an diesen anschließenden Lagerringstück 24 zusammengesetzt. Im Gegensatz zum Lagerzapfen 13a, der nicht Teil der Innenlaufbahn 18 bildet und lediglich zur Befestigung und Abstützung des Lagerrings 22 dient, wird in diesem Fall die Innenlaufbahn 18 sowohl durch die kreisbogenförmige Außenmantelfläche des Lagerzapfenabschnitts 23 als auch durch die kreisbogenförmige Außenmantelfläche des am Umfang bündig daran anschließenden Lagerringstücks 24 gebildet. Der wiederum als gestanzte Öffnung hergestellte Ölkanal 20b durchsetzt das den Lagerzapfenabschnitt 23 frei überspannende Lagerringstück 24. Wie beim Lagerzapfen 13a gemäß Figur 1 gelangt der im Zwischenraum zwischen dem Lagerzapfenabschnitt 23 und dem Lagerringstück 24 befindliche Ölnebel über den Ölkanal 20b in das Innere der Wälzlagerung.

Bei der Unwuchtwelle 1c gemäß Figur 5 ist jeder der Lagerzapfen 13c ebenfalls aus einem integral mit den Wellenabschnitten 10, 11, 12 und lediglich teilzylindrisch ausgebildeten Lagerzapfenabschnitt 25 und einem Lagersegment 27 zusammengesetzt, dass den Lagerzapfenabschnitt 25 zu einem an beiden Axialstirnseiten 26 geschlossenen Zylinder ergänzt. Auch in diesem Fall wird die Innenlaufbahn 18 sowohl durch die kreisbogenförmige Außenmantelfläche des Lagerzapfenabschnitts 25 als auch durch die kreisbogenförmige Außenmantelfläche des am Umfang bündig daran anschließenden Lagersegments 27 gebildet. Bei den Lagersegmenten 27 handelt es sich um massive Spritzgussteile aus Kunststoff, wobei der Ölkanal 20c als schräg zur Drehachse 19 verlaufende Bohrung durch das Lagersegment 27 ausgebildet ist und benachbart zum Lagerzapfen 13c befindlichen Ölnebel in das Innere der Wälzlagerung fördert.

Die jeweils nicht näher dargestellte Befestigung der Lagerringe 22, Lagerringstücke 24 oder Lagersegmente 27 an den Lagerzapfen 13a bis 13c kann mit bekannten Befestigungsmitteln, also stoff-, kraft- oder formschlüssig erfolgen.

### Liste der Bezugszahlen

- 1: Unwuchtwelle
- 2: Brennkraftmaschine
- 3: Zylinder
- 4: Kolben
- 5: Pleuel
- 6: Kurbelwelle
- 7: Zwischenwelle
- 8: Unwucht
- 9: Antriebsabschnitt
- 10: Wellenabschnitt
- 11: Wellenabschnitt
- 12: Wellenabschnitt
- 13: Lagerzapfen
- 14: Wälzlager / Nadelhülse
- 15: Käfig
- 16: Nadel/Wä!zkörper
- 17: Außenring
- 18: Außenmantelfläche / Innenlaufbahn
- 19: Drehachse der Unwuchtwelle
- 20: Ölkanal
- 21: Lagerzapfenkern
- 22: Lagerring
- 23: Lagerzapfenabschnitt
- 24: Lagerringstück
- 25: Lagerzapfenabschnitt
- 26: Axialstirnseite
- 27: Lagersegment

## Patentansprüche

1. Unwuchtwelle (1a) zum Ausgleich von Massenkräften und/oder Massenmomenten einer Brennkraftmaschine (2), mit einem Wellenabschnitt (10, 11, 12) und einem axial daran angrenzenden Lagerzapfen (13a), wobei sowohl der Wellenabschnitt (10, 11, 12) als auch der Lagerzapfen (13a) einen Massenschwerpunkt aufweist, der zur Erzeugung der Wellenunwucht exzentrisch zur Drehachse (19) der Unwuchtwelle (1a) verläuft, wobei der Lagerzapfen (13a) mehrteilig ausgebildet ist und aus einem integral mit dem Wellenabschnitt (10, 11, 12) und lediglich teilzylindrisch ausgebildeten Lagerzapfenkem (21) und aus einem den Lagerzapfenkern (21) vollständig umschließenden Lagerring (22) zusammengesetzt ist, der eine vollzylindrische, als Innenlaufbahn für die Wälzkörper (16) eines Wälzlagers (14) dienende Außenmantelfläche (18) aufweist, **dadurch gekennzeichnet, dass** der Lagerring (22) aus einem Wälzlagerstahl besteht und die Unwuchtwelle (1a) im übrigen als Gussteil ausgeführt ist, wobei der Lagerzapfen (13a) von einem radial auswärts verlaufenden und bezüglich dessen Massenschwerpunkts jenseits der Drehachse (19) auf der Außenmantelfläche (18) austretenden Ölkanal (20a) zur Schmiermittelversorgung der Innenlaufbahn und der Wälzkörper (16) durchsetzt ist, welcher Ölkanal (20a) einen dem Massenschwerpunkt des Lagerzapfens (13a) diametral gegenüberliegenden und den Lagerzapfenkern (21) frei überspannenden Teilumfang des Lagerrings (22) radial durchsetzt

2. Unwuchtwelle (1a) nach Anspruch 1, **dadurch gekennzeichnet, dass** der Ölkanal (20a) im wesentlichen axial mittig auf der Außenmantelfläche (18) des Lagerzapfens (13a) austritt.

## Claims

1. Unbalanced shaft (1a) for compensating for mass forces and/or mass moments of an internal combustion engine (2), having a shaft section (10, 11, 12) and a bearing journal (13a) which adjoins the latter axially, both the shaft section (10, 11, 12) and the bearing journal (13a) having a centre of mass which runs eccentrically with respect to the rotational axis (19) of the unbalanced shaft (1a) in order to produce the shaft unbalance, the bearing journal (13a) being of multiple-part configuration and being assembled from a bearing-journal core (21) which is configured integrally with the shaft section (10, 11, 12) and is of merely partially cylindrical configuration and from a bearing ring (22) which encloses the bearing-journal core (21) completely and has a completely cylindrical outer circumferential face (18) which serves as inner raceway for the rolling bodies (16) of an anti-friction bearing (14), **characterized in that** the bearing ring (22) is composed of an anti-friction bearing steel and the unbalanced shaft (1a) is otherwise configured as a cast part, the bearing journal (13a) being penetrated by an oil duct (20a) for the supply of lubricant to the inner raceway and the rolling bodies (16), which oil duct (20a) runs radially to the outside, exits on the outer circumferential face (18) on the other side of the rotational axis (19) with regard to the centre of mass of the said bearing journal (13a), and radially penetrates a part circumference of the bearing ring (22) which lies diametrically opposite the centre of mass of the bearing journal (13a) and freely spans the bearing-journal core (21).

2. Unbalanced shaft (1a) according to Claim 1, **characterized in that** the oil duct (20a) exits substantially axially in the middle on the outer circumferential face (18) of the bearing journal (13a).

## Revendications

1. Arbre à balourd (1a) pour l'équilibrage de forces de masse et/ou de couples de masse d'un moteur à combustion interne (2), comprenant une section d'arbre (10, 11, 12) et un tourillon de palier (13a) axialement adjacent à celle-ci, la section d'arbre (10, 11, 12) ainsi que le tourillon de palier (13a) présentant un centre de gravité qui s'étend de manière excentrique par rapport à l'axe de rotation (19) de l'arbre à balourd (1a) pour produire le balourd de l'arbre, le tourillon de palier (13a) étant réalisé en plusieurs parties et se composant d'un noyau de tourillon de palier (21) réalisé intégralement avec la section d'arbre (10, 11, 12) et de manière seulement partiellement cylindrique et d'une bague de palier (22) entourant complètement le noyau de tourillon de palier (21), laquelle bague de palier présente une surface d'enveloppe extérieure (18) totalement cylindrique, servant de piste de roulement interne pour les corps de roulement (16) d'un palier à roulement (14), **caractérisé en ce que** la bague de palier (22) se compose d'un acier pour paliers à roulement et l'arbre à balourd (1a) est réalisé par ailleurs sous forme de pièce coulée, le tourillon de palier (13a) étant traversé par un conduit d'huile (20a) s'étendant radialement vers l'extérieur et sortant par rapport à son centre de gravité au-delà de l'axe de rotation (19) sur la surface d'enveloppe extérieure (18) pour l'alimentation en lubrifiant à la piste de roulement interne et aux corps de roulement (16), lequel canal d'huile (20a) traverse radialement une périphérie partielle de la bague de palier (22) diamétralement opposée au centre de gravité du tourillon de palier (13a) et surmontant librement le noyau de tourillon de palier (21).

2. Arbre à balourd (1a) selon la revendication 1, **caractérisé en ce que** le conduit d'huile (20a) sort essentiellement axialement au centre sur la surface d'enveloppe extérieure (18) du tourillon de palier (13a).
